Europäisches Patentamt

European Patent Office

Office européen des brevets

(11) Veröffentlichungsnummer : **0 040 886**
**B1**

# (12) EUROPÄISCHE PATENTSCHRIFT

(45) Veröffentlichungstag der Patentschrift :
15.08.84

(51) Int. Cl.³ : **F 02 D   1/12, G 05 D 13/24**

(21) Anmeldenummer : **81200550.2**

(22) Anmeldetag : **21.05.81**

(54) **Drehzahlbegrenzende Regelvorrichtung.**

(30) Priorität : **23.05.80 NL 8003025**

(43) Veröffentlichungstag der Anmeldung :
**02.12.81 Patentblatt 81/48**

(45) Bekanntmachung des Hinweises auf die Patenterteilung : **15.08.84 Patentblatt 84/33**

(84) Benannte Vertragsstaaten :
**AT BE CH DE FR GB IT LI LU NL SE**

(56) Entgegenhaltungen :
**CH-A-   318 980**
**DE-A- 2 314 319**
**FR-A- 2 275 652**
**US-A- 3 534 660**

(73) Patentinhaber : **NEDERLANDSE CENTRALE ORGANI-
SATIE VOOR TOEGEPAST-NATUURWETENSCHAP-
PELIJK ONDERZOEK**
**Juliana van Stolberglaan 148**
**NL-2595 CL The Hague (NL)**

(72) Erfinder : **Wolters, Leendert**
**Kleidijk 67**
**NL-3161 EK Rhoon (NL)**

(74) Vertreter : **van der Beek, George Frans et al**
**Nederlandsch Octrooibureau Johan de Wittlaan 15**
**P.O. Box 29720**
**NL-2502 LS Den Haag (NL)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

**Beschreibung**

Die Erfindung bezieht sich auf eine Drehzahl begrenzende Regelvorrichtung, insbesondere für einen Verbrennungsmotor, versehen mit einem stillstehenden Gehäuse, worin drehbar ein angetriebener federbelasteter Zentrifugalregler gelagert ist, welcher oberhalb einer vorbestimmten Drehzahl gegen die Federkraft als Signal eine heraustretende Stange in eine drehzahlabhängige Stellung bringt, und mit einer Servo-Verstärkervorrichtung, welche das abgegebene Signal des Zentrifugalreglers linear verstärkt zu einem bedeutend höheren Arbeitsvermögen der geradlinig bewegbaren austretenden Stange des Verstärkers, und wobei diese austretende Stange mit einem senkrecht dazu sich erstreckenden Achsstutzen versehen ist, um welchen ein Baskülenhebel frei schwenkbar montiert ist, welcher Baskülenhebel in der Steverkette zwischen dem Leistungs-Einstellorgan (Gaspedal) und der Brennstoffdosiervorrichtung aufgenommen ist.

Die durch einen derartigen Regler zu bedienenden Vorrichtungen fragen vielfach eine relativ grosse Verstellkraft, vor allem bei Ottomotoren, wobei der Zentrifugalregler relativ gross und kostbar gestaltet werden müsse, wenn dieser die benötigte Verstellkraft direkt liefern müsste. Deshalb wird ein zwischengeschalteter Servo-Kraftverstärker angewandt, welcher an seiner einen Seite ein eine kleine Verstellkraft benötigendes Kommando zugeführt bekommt von genannten Zentrifugalregler und an seiner ausgehenden Seite eine grosse Verstellkraft liefern kann. Dazu wird ein hydraulischer Servoverstärker verwendet, welcher seine Leistung einem Druck in einem hydraulischen Medium entnimmt, z. B. der Brennstoff- oder Schmieröldruck der zu schützenden Kraftmaschine.

Das Ausgangssignal des Verstärkers kennt alle Zwischenstände zwischen einer Betriebsstellung und einer Stopstellung. In der Betriebsstellung wird das normale Leistungs-Bedienungsorgan direkt gekuppelt sein mit der Brennstoff-Dosiervorrichtung, wobei es von keinem Interesse ist, ob Letztere ein Vergaser ist, oder eine Einspritzpumpe oder eine andere gleichartige Vorrichtung. Tritt jedoch oberhalb eine gewissen Drehzahl die drehzahlbegrenzende Regelvorrichtung in Wirkung, dann wird die ausgehende Stange eine andere Position einnehmen und die Brennstoffdosiervorrichtung in die Richtung von geringerer Brennstoffmenge bringen, unabhängig davon in welcher Position sich das Leistungsbedienungsorgan (Gaspedal) momentan befindet. Oft wird dazu in die mechanischen Transmissionsglieder zwischen dem Leistungsbedienungsorgan (Gaspedal) und der Brennstoffdosiervorrichtung, welche Transmissionsglieder aus Stangen, Hebeln oder auch Kabeln bestehen können, ein sogenannter Baskülenhebel zwischengeschaltet. Dies ist ein Hebel mit einem festen Drehpunkt, wobei das eine Ende mit dem Leistungsbedienungsorgan und das andere Ende mit der Brennstoffdosiervorrichtung verbunden ist. Indem nun der Drehpunkt dieses Baskülenhebels verlagerbar in eine Richtung etwa senkrecht zur Hebelrichtung ausgeführt wird, wird in bekannter Art und Weise die gewünschte Funktion bekommen.

Aus der DE-A-2 314 319 ist ein bekannter Drehzahlregler vom Verstell-Typ (« all speed ») bekannt, versehen von einer Sicherheitsvorrichtung um den Motor im normalen Betriebsgebiet zu schützen gegen ungewollte Zufuhr von Start-Mehrmenge zusätzlich zu der normalen Vollastbrennstoffmenge.

Die Erfindung hingegen bezieht sich auf eine Art von Sicherheitsvorrichtung gegen « Maximalleistung », wirksam um das gleichzeitige Auftreten von höchsten Drehzahlen bei Vollast-Brennstoffmenge zu vermeiden, also auf eine Art von « Overload-Schutz », ohne Drehzahlreglereigenschaften und ohne Start-Brennstoff-Mehrmengen-Vorrichtung.

Diese mechanischen Mittel werden zum Teil im Freien angebaut, z. B. gegen die Aussenseite eines Motors und sind dadurch leicht beschädigbar und verschleissen schnell durch Schmutz. Die Erfindung beabsichtigt nun um in einer Einheit Folgendes zu kombinieren : der Zentrifugalregler, der Servoverstärker und die Baskülenhebelfunktion, wobei alles in einem geschlossenen Gehäuse untergebracht werden soll.

Nach der Erfindung wird nun die obenbeschriebene drehzahlbegrenzende Regelvorrichtung dadurch gekennzeichnet, dass der Baskülenhebel aus einer zylindrischen Scheibe besteht, welche beidseitig der austretenden Stange des Verstärkers in schlupffreier abrollender Berührung mit jeweils einem Segment einer Zylinderoberfläche ist, wovon die Rotationsachsen im Gehäuse gelagert sind, welche Achsen sich parallel zur Welle der zylindrischen Scheibe erstrecken, wobei das eine Segment mit dem Gaspedal und das andere Segment mit der Brennstoffdosiervorrichtung verbunden ist, und dass der Zentrifugalregler, der Servoverstärker und die Baskülenvorrichtung als Einheit in einem geschlossenen Gehäuse untergebracht sind. In Anschluss hierzu kann sofort eine Vorzugsausführungsform genannt werden, wobei die über einander abrollenden Oberflächen mit einer korrespondierenden in einander greifenden Verzahnung versehen sind, wodurch ein zentrales Zahnritzel in Eingriff steht mit den beiden Zahnsegmenten.

Es ist jedoch auch möglich dass die drei zylindrischen abrollenden Oberflächen mit dünnen biege-elastischen vorgespannten Bändern mit einander gekuppelt sind, wobei jeder Band in einem Punkt von jedem Paar zusammenwirkender Oberflächen befestigt ist oder dass die Oberflächen mit einer Kettenversahnung versehen sind und über Ketten mit einander gekuppelt sind.

Nach einer weiteren Vorzugsausführungsform wird die Vorrichtung nach der Erfindung dadurch gekennzeichnet, dass das Zahnritzel in seiner einen Endstellung (Betriebsstellung) sich gleichweit von der einen Seite von der sich durch die Mittellinie der beiden Zahnsegmente erstreckenden Ebene befindet, als an der anderen Seite davon in der anderen Endstellung (Stopstellung). Es hat sich gezeigt, dass die Erscheinung dass die Ritzelwelle genannte Verbindungsebene zwischen den beiden austretenden Wellen beidseitig ein Wenig verlässt, nichtstowehiger nur einen vernachlässigbaren Einfluss hat auf das Zahnspiel und also auf das Spiel in der Transmission zwischen dem Leistungsbedienungsorgan (Gaspedal) und der Brennstoffdosiervorrichtung. Wenn nun obendrein noch Vorspannmittel angewendet werden, sowie Federn, welche das sich bei Verschiebung des Zahnritzels ändernde Zahnspiel zwischen den Segmenten und dem Ritzel immer in dieselbe Richtung kompensieren, dann gibt diese so einfache Lösung eine reproduzierbare Wirkung trotz seiner theoretischen Mangel.

Anhand der nachfolgenden Beschreibung von der agbebildeten Vorzugsausführungsform der Erfindung, soll diese näher erläutert werden.

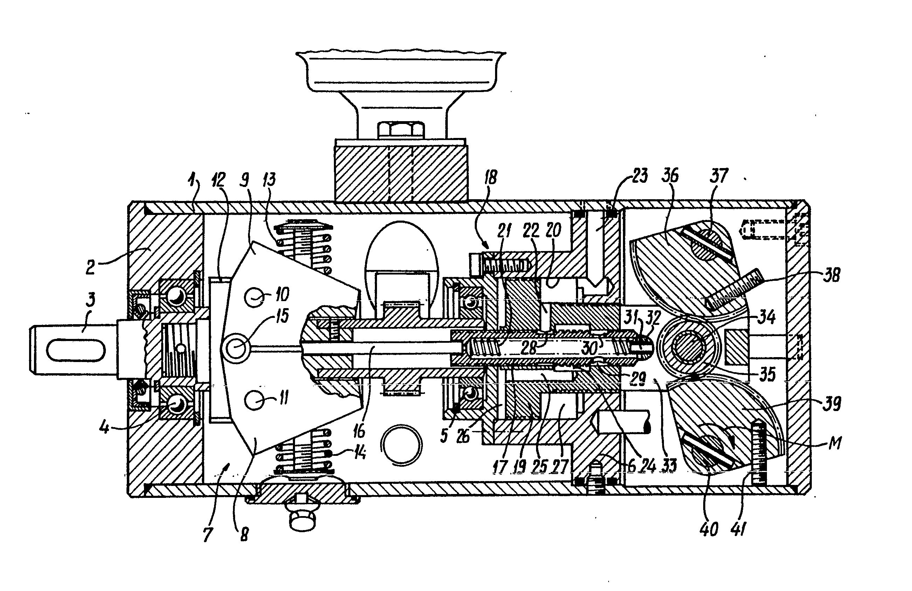

In der Figur ist mit 1 das Gehäuse der drehzahlbegrenzenden Regelvorrichtung angedeutet. Das Gehäuse zur linken Seite ist verschlossen durch einen Deckel 2, worin abdichtend eine Antriebswelle 3 gelagert ist, welche Welle durch nicht wiedergegebene Mittel angetrieben wird durch die zu regelnde Maschine, wie z. B. ein Verbrennungsmotor. Die Eingangswelle ist gelagert in einem Kugellager 4 zur linken Seite und zu rechten Seite in einem Kugellager 5 das in einem kolbenförmigen Körper 6 in axialen Sinne im Gehäuse fest fixiert ist. Weil ein Zentrifugalregler 7 an sich bekannt ist, wird dieser nicht in Einzelheiten wiedergegeben, doch die beiden Gewichte 8 und 9 sind mit ihren Scharnierwellen 10 und 11 schwenkbar verbunden an einer mit der Antriebswelle 3 verbundenen Scheibe 12. Bei Rotation der Welle 3 und der Scheibe 12, werden die Gewichte 8 und 9 eine nach aussen gerichtete Zentrifugalkraft erfahren, wodurch diese schwenken wollen um ihre Scharnierachsen 10 und 11. Dabei werden die Gewichte gegengehalten durch die beiden Federn 13 und 14, welche eine derart einstellbare Vorspannung haben dass sie die Zentrifugalgewichte in ihrer innersten Stellung halten bis zu einer Drehzahl welche zirka 80 % der maximal zulässigen Betriebsdrehzahl beträgt. Wird diese eingestellte Drehzahl überschritten, dann werden durch eine günstige Kombination von Zentrifugalkraft gegen Federkarakteristik, beim Erreichen der maximalen Drehzahl die beiden Zentrifugalgewichte vollständig ausgeregelt sein und ihre äusserste Stellung erreicht haben. Im Rotationspunkt 15, worauf die beiden Gewichte 8 und 9 einwirken, wird die an den Zentrifugalregler gekuppelte austretende Stange 16 nach rechts verschoben werden bei zunehmender Drehzahl oberhalb der eingestellten Drehzahl. Das Ende der austretenden Stange 16 ruht gegen einen Regelschieber 17 welcher die Servo-Verstärkungsvorrichtung 18 steuert. Diese Verstärkungsvorrichtung besteht aus einem Servokolben 19 welcher in einer zylindrischen Bohrung 20 hin und her bewegen kann. Der Regelschieber 17 ist versehen von einer zentralen Längsbohrung in welcher schwache Feder 21 untergebracht ist welche mit ihrem linken Ende gegen eine Schulter des Regelschiebers 17 drückt und Letzteren immer in Kontakt hält über die austretende Stange 16 mit den Zentrifugalgewichten. Die Feder 21 ruht zur rechten Seite gegen einen Stift 32 welcher in einer Verlängerung 33 des Servokolbens 19 angebracht ist. Der Regelschieber 17 kann somit unter Einfluss der Bewegung der Zentrifugalgewichte 8 und 9 über eine kurze Strecke nach links und rechts geschoben werden gegenüber den Servokolben 19 und dessen Verlängerung 33, worin der Regelschieber 17 abdichtend und gleitend gelagert ist. Über eine externe Quelle hydraulischen Druckmediums, sowie das Schmieröl- oder Brennstoffsystem des Verbrennungsmotors, wird jenes Medium unter Druck über die Leitung 23 dem Verstärker 18 zugeführt. Dieser Druck herrscht, solange der Motor in Betrieb ist, fortwährend in der ringförmigen Kammer 27 und im radialen Verbindungskanal 22. Der Servokolben 19 mit seiner Verlängerung 33 erfährt deshalb fortwährend eine nach links gerichtete Kraft. Der Zylinderraum 26 zur linken Seite des Servokolbens 19 ist über eine axiale Bohrung 25 verbunden mit einer ringförmigen Nute 24 welche konzentrisch mit der zentralen Bohrung für den Regelschieber 17 im Servokolben untergebracht ist. Der Regelschieber 17 ist ferner von zwei rundlaufenden Nuten 28 bzw. 30 versehen, welche derart angeordnet sind, dass in der Gleichgewichtsstellung — dies ist die Stellung wobei der Servoverstärker eine Stellung einnimmt welche korrespondiert mit jener des Regelschiebers 17 — die beiden Nuten 28 und 30 sich gerade links bzw. rechts von der Nute 24 im Servokolben befinden. Da der linke Zylinderraum 26 über die Bohrung 25 in Verbindung steht mit dem Ringkanal 24, ist somit die Verbindung des Raumes 26 in dieser Stellung abgesperrt. Verschiebt sich, ausgehend von der abgebildeten Position des Regelschiebers 17, dieser ein Wenig nach rechts, dann kann Medium unter Druck aus dem Kanal 22 über die Ringnute 28 eintreten in den Ringkanal 24 und weiterströmen können in den Zylinderraum 26. Da die aktive Oberfläche von der linken Seite des Servokolbens 19 grösser ist als die aktive Oberfläche zur rechten Seite und in der abgebildeten Situation praktisch derselbe Druck im Medium links und rechts des Servokolbens herrscht, wird der Kolben sich nach rechts verschieben bis die Nuten 24 und 28 nicht mehr korrespondieren. Der Servokolben hat dann die neue Stellung des Regelschiebers 17 gefolgt und ein neues Gleichgewicht gefunden. Umgekehrt kann Medium aus dem Raus 26 abströmen über Bohrung 25 und Ringkanal 24 wenn die Ringnute 30 im Regelschieber 17 in Verbindung kommt mit der Nute 24. Das Medium kann dann über die Hohlbohrung 29 nach rechts abströmen durch eine Bohrung 31 im Stifft 32. Damit wird das Medium drucklos und kann abströmen in das Gehäuse der Vorrichtung. Über eine nicht abgebildete Abfuhrvorrichtung kann das Medium aus dem Gehäuse abgeführt werden, womit gleichzeitig der Flüssigkeitsspiegel im Gehäuse bestimmt wird. Zur rechten Seite ist der Servokolben 19 bei 33 gabelformig ausgebaut. Senkrecht zur Mittellinie der Vorrichtung ist dort eine Welle 34 angeordnet um welche ein Zahnritzel 35 gelagert ist. Dieses Zahnritzel 35 kann mit dem Servokolben 19 nach links und rechts verstellt werden in Antwort auf verlagerungen des Regelschiebers 17 infolge der Wirkung der Zentrifugalgewichte. Ein Zahnsegment 36 ist an der einen Seite in Eingriff mit dem Ritzel 35 während dieses Segment drehfest angeordnet ist auf einer im Gehäuse gelagerten Welle 37. Ebenso ist ein korrespondierendes Zahnsegment 39 drehfest mit Hilfe einer Welle 40 im Gehäuse gelagert. Die Wellen 37 und 40 laufen parallel in gleicher Entfernung der Mittellinie der Vorrichtung und sind spielfrei und abdichtend durch die Wand des Gehäuses nach aussen durchgeführt. Jedes Segment ist versehen mit einer einstellbaren Anschlagschraube 38 bzw. 41. Wenn sich das Ritzel 35 in der linken Endstellung befindet, dann ist es in einer gleich grossen Entfernung zur linken Seite der Verbindungslinie durch die beiden ausgehenden Wellen 37 und 40 wie das Ritzel 35 sich in der rechten Endposition zur rechten Seite jener Verbindungslinie befindet. Dies bedeutet dass das sich mit der Verschiebung des Ritzels 35 in axiale Richtung ändernde Zahnspiel zwischen dem Ritzel und den Segmenten gleich verteilt ist zu beiden Seiten der Mittelposition des Ritzels. Die Welle 37 ist mit bekannten jedoch nicht wiedergegebenen Mitteln, sowie Stangen und Kabeln, verbunden mit dem Leistungs-Bedienungsorgan des Fahrzeuges, also meistens mit dem Gaspedal. Die austretende Welle 40 ist direkt verbunden über nicht wiedergegebene bekannte Verbindungsmittel mit der Brennstoffdosiervorrichtung, sowie einer Brennstoff-Einspritzpumpe oder einem Vergaser. Bei Anwendung der beschriebenen drehzahlbegrenzenden Regelvorrichtung wird angenommen dass die Brennstoffdosiervorrichtung immer versehen ist mit einer sogenannten Zurückstellfeder welche ein zurückstellendes Drehmoment auf die Welle 40 ausübt, welches Drehmoment durch den Pfeil M angegeben ist. Über das Ritzel 35 und das Segment 36 wird diese Zurückstellkraft in gebräuchlicher Weise über die Welle 37 rückwirken auf das Gaspedal. Sobald der Motor in Betrieb ist, herrscht Mediumdruck in der Zylinderkammer 27, wodurch der Servokolben immer einer nach links gerichteten Kraft unterworfen ist und in der linken Endstellung verharren wird solange der Kolben kein entgegengesetztes Kommando bekommt vom Zentrifugalregler 7. Das Ritzel 35 und der Servokolben 19 befinden sich dabei in der abgebildeten Stellung. Bedienung des Gaspedales wird über die Welle 37 und das Zahnsegment 36 eine Rotation des Ritzels 35 zur Folge haben, was eine gleich grosse Verdrehung der Welle 40 verursacht, welche die Brennstoffdosiervorrichtung folgen lässt. Im Ruhezustand des Motors wird die obengenannte Zurückstellfeder der Brennstoffdosiervorrichtung ebenfalls dafür sorgen, dass der Servokolben und das Ritzel 35 stets in der linken Endstellung verbleiben. Wird nun in Betrieb die durch die Reglerfedern 13 und 14 eingestellte Drehzahl von zirka 80 % der maximum Motordrehzahl überschritten, dann wird der Regelschieber 17 nach rechts bewegen, augenblicklich gefolgt durch eine ebensogrosse Verschiebung nach rechts des Servokolbens 19 und ausserdem des Zahnritzels 35. Wird dabei die Stellung des Gaspedales nicht geändert, wobei deshalb das Zahnsegment 36 in einer fixierten Stellung bleibt, dann wird durch die Regelwirkung der Vorrichtung das Zahnsegment 39 nach rechts verdrehen und über die Welle 40 die Brennstoffdosiervorrichtung in Richtung geringerer Brennstoffmenge versetzen. Demgegenüber wird im grössten Teil des durch den Motor in Betrieb gefahrenen Drehzahlgebiet, das Ritzel 35 sich in der linken Endstellung befinden weil dieses Gebiet sich unterhalb der eingestellten Drehzahl von zirka 80 % befindet. Die Wirkung der Vorrichtung beabsichtigt einen Schutz des Motors gegen die Kombination von hohen Drehzahlen bei hoher Belastung. Und zwar wird bei hohen Drehzahlen die Brennstoffzufuhr reduziert, obgleich das Gaspedal in der maximum Stellung bleibt und bei niedrigeren Drehzahlen wird die Wirkung des Gaspedales unbeeinflusst weitergeleitet zur Brennstoffdosiervorrichtung, womit der Motor das volle Drehmoment abgeben kann.

Überflüssigerweise wird darauf gewiesen, dass die beschriebene Vorrichtung noch den bekannten und gebräuchlichen Drehzahlregler ersetzt, noch völlig die Funktion eines gebräuchlichen Über-Drehzahl-Schutzes erfüllt. Letzterer stopt ja den Motor beim Überschreiten der eingestellten Höchstdrehzahl.

## Ansprüche

1. Drehzahlbegrenzende Regelvorrichtung, insbesondere für einen Verbrennungsmotor, versehen mit einem stillstehenden Gehäuse (1), worin drehbar ein angetriebener federbelasteter Zentrifugalregler (7) gelagert ist, welcher oberhalb einer vorbestimmten Drehzahl gegen die Federkraft als Signal eine heraustretende Stange (16) in eine drehzahlabhängige Stellung bringt, und mit einer Servo-Verstärkervorrichtung (18), welche das abgegebene Signal des Zentrifugalreglers linear verstärkt zu einem bedeutend höheren Arbeitsvermögen der geradlinig bewegbaren austretenden Stange (33) des Verstärkers, und wobei diese austretende Stange (33) mit einem senkrecht dazu sich erstreckenden Achsstutzen (34) versehen ist, um welchen ein Baskülenhebel (35) frei schwenkbar montiert ist, welcher Baskülenhebel (35) in der Steuerkette zwischen dem Leistungs-Einstellorgan (Gaspedal) (36, 37) und der Brennstoffdosiervorrichtung (39, 40) aufgenommen ist, dadurch gekennzeichnet, dass der Baskülenhebel aus einer zylindrischen Scheibe (35) besteht, welche beidseitig der austretenden Stange (33) des Verstärkers (18) in schlupffreier abrollender Berührung mit jeweils einem Segment einer Zylinderoberfläche (36, 39) ist, wovon die Rotationsachsen (37, 40) im Gehäuse (1) gelagert sind, welche Achsen sich parallel zur Welle der zylindrischen Scheibe (35) erstrecken, wobei das eine Segment (36) mit dem Gaspedal und das andere Segment (39) mit der Brennstoffdosiervorrichtung verbunden ist, und dass der Zentrifugalregler (7), der Servoverstärker (18) und die Baskülenvorrichtung (35, 36, 39) als Einheit in einem geschlossenen Gehäuse untergebracht sind.

2. Vorrichtung nach Anspruch 1, dadurch gekennzeichnet, dass die drei zylindrischen abrollenden Oberflächen (35, 36, 39) mit einer korrespondierenden, ineinander eingreifenden Verzahnung versehen sind, wodurch ein zentrales Zahnritzel (35) in Eingriff mit den zwei Zahnsegmenten (36, 39) ist.

3. Vorrichtung nach Anspruch 1, dadurch gekennzeichnet, dass die drei zylindrischen abrollenden Oberflächen über dünne biege-elastische vorgespannte Bänder miteinander gekuppelt sind, wobei jedes Band in einem Punkt auf jedem von einem paar zusammenwirkender Oberflächen befestigt ist, oder dass die Oberflächen mit einer Kettenverzahnung versehen sind und über Ketten gekuppelt sind.

4. Vorrichtung nach Anspruch 2, dadurch gekennzeichnet, dass das Zahnritzel (35) in seiner einen Endlage (Betrieb) sich gleichweit an der einen Seite der sich durch die beiden Zahnsegmentachsen (37, 40) erstreckenden Ebene befindet, als an dessen anderer Seite in der anderen Endlage (Stop).

5. Vorrichtung nach Anspruch 2, dadurch gekennzeichnet, dass Vorspannmittel, wie z. B. Federn, die das sich bei Verschiebung des Zahnritzels ändernde Zahnspiel zwischen den Segmenten (36, 39) und dem Ritzel (35) immer in diegleiche Richtung kompensieren, vorgesehen sind.

**Claims**

1. A speed-limiting governor device, in particular for an internal-combustion engine, provided with a stationary housing (1), wherein a driven spring-loaded centrifugal governor (7) is rotatably mounted which, above a predetermined speed of rotation, moves a protruding rod (16) against a spring force into a speed-dependent position as a signal, and with a servo-amplifying means (18) which linearly amplifies the output signal of the centrifugal governor into a considerably greater output of a linearly movable protruding bar (33) of the amplifier, and wherein this protruding bar (33) is provided with a stub axle (34) which extends perpendicularly thereto and about which a bascule lever (35) is mounted freely pivotably, said bascule lever (35) being incorporated in the control system between the power-control member (accelerator pedal) (36, 37) and the fuel-metering means (39, 40), characterised in that the bascule lever comprises a cylindrical disc (35) which on both sides of the protruding bar (33) of the amplifier (18) is in non-slip rolling contact with a respective segment of a cylindrical surface (36, 39), the axes of rotation (37, 40) of which are mounted in the housing (1), which axes extend parallel to the shaft of the cylindrical disc (35), one segment (36) being connected to the accelerator pedal and the other segment (39) being connected to the fuelmetering means, and in that the centrifugal governor (7), the servo-amplifier (18) and the bascule means (35, 36, 39) are accomodated as a unit in a closed housing.

2. A device according to Claim 1, characterised in that the three cylindrical rolling surfaces (35, 36, 39) are provided with corresponding interengaging teeth, whereby a central pinion (35) is in engagement with the two toothed segments (36, 39).

3. A device according to Claim 1, characterised in that the three cylindrical rolling surfaces are coupled with one another via thin flexibly resilient pretensioned bands, each band being secured at one point on each of one pair of cooperating surfaces, or in that the surfaces are provided with sprocket teeth and are coupled via chains.

4. A device according to Claim 2, characterised in that in one end position (operation) the pinion (35) is situated the same distance to one side of the plane extending through the two toothed segment axes (37, 40) as on the other side in its other end position (stop).

5. A device according to Claim 2, characterised in that pretensioning means, for example springs, are provided which always in the same direction compensate for the tooth clearance, varying upon displacement of the pinion, between the segments (36, 39) and the pinion (35).

**Revendications**

1. Dispositif régulateur limiteur de vitesse, en particulier pour moteur à combustion interne, pourvu d'un boîtier fixe (1) dans lequel est monté un régulateur centrifuge tournant (7) chargé par des ressorts et lorsqu'il est entraîné, qui, au-dessus d'une vitesse fixée, le signale en déplaçant, contre l'action d'un ressort, une tige (16) jusqu'à une position dépendant de la vitesse, et d'un servo-amplificateur (18) qui amplifie linéairement le signal émis par le régulateur centrifuge en une capacité de travail beaucoup plus grande de la tringle (33) mobile de façon rectiligne, de l'amplificateur, cette tringle (33) étant pourvue d'un pivot (34) d'axe s'étendant perpendiculairement à elle sur lequel est monté de façon à pouvoir tourner librement un levier à bascule (35) qui est placé dans la chaîne de commande entre l'organe de réglage de puissance (pédale d'accélérateur) (36, 37) et le dispositif de dosage de carburant (39, 40), caractérisé par le fait que le levier à bascule est constitué d'une pièce cylindrique (35) qui, de chaque côté de la tige sortante (33) de l'amplificateur (18), est en contact roulant sans glissement avec un secteur d'une surface cylindrique (36, 39) dont l'axe de rotation (37, 40) est monté dans le boîtier (1), les axes de rotation de ces secteurs étant parallèles à l'arbre de la pièce cylindrique (35), un des secteurs (36) étant relié à la pédale d'accélérateur et l'autre secteur (39) au dispositif de dosage de carburant, en ce que le régulateur centrifuge (7), le servoamplificateur (18) et le dispositif à bascule (35, 36, 38) sont montés sous forme d'un seul bloc dans un boîtier fermé.

2. Dispositif selon la revendication 1, caractérisé par le fait que les trois surfaces cylindriques roulantes (35, 36, 39) sont pourvues de dentures correspondantes en prise par lesquelles un pignon central (35) est en prise avec les deux secteurs dentés (36, 39).

3. Dispositif selon la revendication 1, caractérisé par le fait que les trois surfaces cylindriques roulantes sont accouplées par des bandes minces élastiques à la flexion et précontraintes, chaque bande étant fixée en un point sur chacune de deux surfaces coopérantes, ou que les surfaces sont pourvues d'une denture à chaîne et accouplées par des chaînes.

4. Dispositif selon la revendication 2, caractérisé par le fait que le pignon (35), dans une position extrême (marche), est à la même distance d'un côté du plan passant par les axes (37, 40) des secteurs dentés qu'il l'est de l'autre côté de ce plan dans son autre position extrême (arrêt).

5. Dispositif selon la revendication 2, caractérisé par le fait qu'il est prévu des moyens de précontrainte, par exemple des ressorts, qui compensent toujours dans le même sens le jeu entre les dents des secteurs (36, 39) et du pignon (35), qui varie quand le pignon se déplace.